**Europäisches Patentamt**

**European Patent Office**

**Office européen des brevets**

(11) Veröffentlichungsnummer: **0 054 713**
**A2**

## (12) EUROPÄISCHE PATENTANMELDUNG

(21) Anmeldenummer: 81109183.4

(22) Anmeldetag: 29.10.81

(51) Int. Cl.³: **G 01 N 31/16**

(30) Priorität: 20.12.80 DE 3048237

(43) Veröffentlichungstag der Anmeldung: 30.06.82
Patentblatt 82/26

(84) Benannte Vertragsstaaten: **AT BE CH DE FR GB IT LI NL SE**

(71) Anmelder: **Merck Patent Gesellschaft mit beschränkter Haftung, Frankfurter Strasse 250, D-6100 Darmstadt (DE)**

(72) Erfinder: **Fischer, Wolfgang, Dr., Kröhweg 27, D-6100 Darmstadt (DE)**
Erfinder: **Krenn, Karl-Dieter, Zieglerstrasse 41, D-6102 Pfungstadt (DE)**

(54) Pyridinfreies Karl-Fischer-Reagenz und Verfahren zur Bestimmung von Wasser mit Hilfe dieses Reagenzes.

(57) Die Erfindung betrifft ein pyridinfreies Karl-Fischer-Reagenz und ein Verfahren zur Bestimmung von Wasser mit Hilfe dieses Reagenzes, bestehend aus einem Lösemittel, enthaltend Schwefeldioxid und einen Pyridinersatz in einem Lösungsmittel, und einem Titriermittel, enthaltend Jod in einem Lösungsmittel, das dadurch gekennzeichnet ist, daß der Pyridinersatz Benzoat oder Ammoniak ist. Lösemittel und Titriermittel können sowohl als getrennte Lösungen als auch in Form einer einzigen Lösung vorliegen.

EP 0 054 713 A2

ACTORUM AG

COMPLETE DOCUMENT

C054713

Merck Patent Gesellschaft
mit beschränkter Haftung
D a r m s t a d t


Pyridinfreies Karl-Fischer-Reagenz
und Verfahren zur Bestimmung von Wasser
mit Hilfe dieses Reagenzes


Die Erfindung betrifft ein pyridinfreies Karl-Fischer-Reagenz zur Bestimmung von Wasser, das aus einem Lösemittel für die zu untersuchende Probe und einem Titriermittel besteht sowie ein Verfahren zur Bestimmung von Wasser mit Hilfe dieses Reagenzes. Das Lösemittel enthält Schwefeldioxid und einen Pyridinersatz in einem Lösungsmittel, das Titriermittel enthält Jod in einem Lösungsmittel.

Aus der Literatur ist eine Reihe von Vorschlägen bekannt, Pyridin im Karl-Fischer-Reagenz durch andere Substanzen zu ersetzen. In Anal. Chim. Acta 94, 395 (1977) wird Natriumacetat als Ersatz für Pyridin verwendet. Dieser Ersatz bringt jedoch gewisse Nachteile mit sich. Es bildet sich z.B. mit dem als Lösungsmittel verwendeten Alkohol Essigsäureester, wobei Wasser frei wird, das bei einer Wasserbestimmungsmethode naturgemäß stört. Die Lösungen sind deshalb nicht stabil, ihr Blindwert nimmt stetig zu.

GSPHA2 B

0054713

Im GB-Patent 728 947 sind außer Acetaten auch Alkoholate, Phenolate und Salze schwacher organischer Säuren als Ersatz für Pyridin genannt. Die Überprüfung der in der Patentschrift genannten Substanzen ergab, daß diese als Pyridinersatz ungeeignet sind, teils wegen nicht ausreichender Löslichkeit, teils wegen nicht genügender Stabilität der Fertiglösungen. Weiter ist bekannt, daß bei Ersatz von Pyridin durch Amine keine stabilen Endpunkte bei der Titration zu erhalten sind (Anal. Chem. 28, 1166 (1956)).

Damit ergibt sich aus dem Stand der Technik, daß der Ersatz von Pyridin durch die genannten Verbindungen nicht sinnvoll ist, weil diese Reagenzien entweder nicht genügend löslich oder nicht haltbar sind oder falsche Resultate liefern.

Der Erfindung lag die Aufgabe zugrunde, ein pyridinfreies Karl-Fischer-Reagenz zur Verfügung zu stellen, das stabil ist und exakte Analysenergebnisse liefert.

Überraschenderweise wurde gefunden, daß ein stabiles und exakte Endpunkte lieferndes Karl-Fischer-Reagenz erhalten werden kann, wenn als Pyridinersatz Benzoat oder Ammoniak verwendet wird. Diese Substanzen sind in der Reagenzlösung sehr gut löslich, reagieren mit Alkoholen praktisch nicht unter Esterbildung und sind sehr lagerstabil.

Gegenstand der Erfindung ist ein pyridinfreies Karl-Fischer-Reagenz zur Bestimmung von Wasser, bestehend aus einem Lösemittel, enthaltend Schwefeldioxid und einen Pyridinersatz in einem Lösungsmittel, und einem Titriermittel, enthaltend Jod in einem Lösungsmittel, das dadurch gekennzeichnet ist, daß der Pyridinersatz Benzoat, oder Ammoniak ist.

GSPHA2 B

C054713

Das molare Verhältnis von Pyridinersatz zu Schwefeldioxid beträgt etwa 2 : 1 bis etwa 1 : 2, vorzugsweise 1 : 1.

Das pyridinfreie Karl-Fischer-Reagenz besteht aus zwei Lösungen, einem Lösemittel und einem Titriermittel. Das Lösemittel enthält Schwefeldioxid und einen Pyridinersatz in einem Lösungsmittel und dient zur Aufnahme der auf ihren Wassergehalt zu untersuchenden Probe. Das Titriermittel ist ein auf einen konstanten Titer eingestellte Lösung von Jod in einem Lösungsmittel. Lösemittel und Titriermittel können aber auch bereits vor der Titration zusammengegeben werden. Das so erhaltene Reagenz ist ausreichend stabil, um in üblicher Weise als Titrierflüssigkeit eingesetzt zu werden. Dieses Verfahren ist besonders dann von Vorteil, wenn die zu untersuchende Substanz in einem anderen Lösungsmittel besser löslich ist als in dem im Lösemittel enthaltenen Lösungsmittel. In diesem Fall ist auch die Reaktionsgeschwindigkeit nicht von der Lösegeschwindigkeit abhängig.

Ferner betrifft die Erfindung ein Verfahren zur Bestimmung von Wasser mit Hilfe des genannten pyridinfreien Karl-Fischer-Reagenzes.

Ein geeigneter Ersatz für Pyridin im erfindungsgemäßen Reagenz sind die Alkali- und Erdalkalisalze von Benzoesäure, wie Natrium-, Kalium-, Magnesium-, Calcium-, Strontium-, Bariumbenzoat, vorzugsweise Natrium- und Kaliumbenzoat sowie Ammoniak. Ein Vergleich zwischen einem Lösemittel, das Natriumacetat, Schwefeldioxid und Methanol enthält und Lösemitteln, die anstelle von Natriumacetat Natriumbenzoat enthalten zeigt, daß der Wassergehalt der jeweiligen Lösungen beim Kochen unter Rückfluß nach 220 Stunden im Falle der Natriumacetat enthaltenden Lösung von 0,064 auf 0,47 % stieg, während der Wassergehalt im Falle von Benzoat dagegen nur von 0.051 auf 0,056 % stieg. Die Verwendung von Ammoniak als Pyridinersatz hat ebenfalls eine Reihe von Vorteilen:
das Reagenz ist stabil, es geht keine Reaktion
mit dem Lösungsmittel ein und es reagiert viel
schneller als eine Lösung mit Pyridin.

Als Lösungsmittel sowohl für das Löse- als auch für das Titriermittel eignen sich alle in der Literatur zu diesem Zweck beschriebenen Lösungsmittel, vorzugsweise Alkohole und/oder Glykole, insbesondere niedere Alkohole wie Methanol, Ethanol, Propanol usw. sowie Ethylenglykol und Ethylenglykolmonoalkylether. Die Lösungsmittel können einzeln oder in einem beliebigen Mischungsverhältnis verwendet werden. So ist es z.B. möglich, den erfindungsgemäßen Pyridinersatz in einem Alkohol zu lösen und das Jod in einem Glykol oder beide in einem beliebigen Mischungsverhältnis von Alkoholen, Glykolen oder Mischungen beider Lösungsmitteltypen.

Mit dem erfindungsgemäßen pyridinfreien Karl-Fischer-Reagenz kann der Endpunkt der maßanalytischen Wasserbestimmung visuell, photometrisch oder elektrometrisch (Dead-Stop-Methode, coulometrische Methode) bestimmt werden. Das Reagenz eignet sich sowohl für den Einsatz im Titrierautomaten als auch als Feldmethode, wobei die Feldmethode durch den Ersatz des Methanols durch die genannten Lösungsmittel mit niedrigem Dampfdruck überhaupt erst ermöglicht wurde.

Durch den Ersatz von Pyridin durch die genannten Verbindungen ergeben sich eine Reihe von Vorteilen: Der Umschlag am Äquivalenzpunkt ist deutlicher als mit den herkömmlichen Karl-Fischer-Reagenzien; das Reagenz ist weniger giftig, es ist insgesamt umweltfreundlicher und billiger.

Die Titration erfolgt generell unter Ausschluß von Luftfeuchtigkeit. Bei der visuellen Titration titriert man auf den Farbumschlag von farblos nach gelb. Visuelle und photometrische Titration werden jedoch unmöglich, wenn die zu analysierende Lösung eine starke Eigenfarbe besitzt. Bevorzugt ist deshalb heute die elektrometrische Titration, insbesondere die sogenannte Dead-Stop-Methode. Dieses Verfahren beruht auf einer bewußt erzeugten Polarisation an zwei gleichen Platinelektroden. Beim Anlegen einer geringen Potentialdifferenz wird die durch die Polarisation entstehende Spannung kompensiert und der Stromfluß unterbrochen. Der Endpunkt der Titration wird durch einen starken Ausschlag des Galvanometers mit anschließendem unverändertem Verharren angezeigt, was auf dem scharfen Übergang von Polarisation oder Depolarisation einer Elektrode zur vollständigen Depolarisation oder Polarisation beider Elektroden beruht.

Die Erfindung wird durch die folgenden Beispiele näher erläutert.

Beispiel 1

Zur Herstellung des Lösemittels und des Titriermittels wurden die jeweiligen Substanzen in dem entsprechenden Lösungsmittel gelöst:

a)    Lösemittel

160 g Schwefeldioxid (2,5 M) und
720 g Natriumbenzoat (5,0 M)    in
5 l Methanol

GSPHA2 B

0054713

b)   Titriermittel

     250 g Jod in
     5 l Methanol

Die auf ihren Wassergehalt zu untersuchende Substanz wurde je nach dem geschätzten Wassergehalt in 20 ml des Lösemittels gelöst und mit dem Titriermittel unter ständigem Rühren unter Ausschluß von Luftfeuchtigkeit bis zum Endpunkt titriert.

Beispiel 2

Es wurden folgende Karl-Fischer-Lösungen hergestellt:

a)   Lösemittel

      64 g Schwefeldioxid (1,0 M) und
     144 g Natriumbenzoat (1,0 M) in
     1 l Ethylenglykolmonomethylether

b)   Titriermittel

     50 g Jod in
     1 l Ethylenglykolmonomethylether

Mit diesen Lösungen wurden die gleichen Ergebnisse erzielt wie mit den Lösungen nach Beispiel 1. Die Ergebnisse änderten sich auch nicht nach teilweisem oder vollständigem Ersatz des Ethylenglykolmonomethylethers durch Methanol oder Propanol.

GSPHA2 B

- 8 -

0054713

Beispiel 3

Zur Durchführung einer coulometrischen Wasserbestimmung
wurden folgende Lösungen verwendet:

a)    Kathoden-Lösung

64 g Schwefeldioxid (1,0 M) und
144 g Natriumbenzoat (1,0 M) in
1 l Methanol

b)    Anoden-Lösung

analog, jedoch mit Zusatz von 5 bis 10 g Jod.

Beispiel 4

Es wurden folgende Karl-Fischer-Lösungen hergestellt:

a)    Lösemittel

In 10 l Methanol wurden aus zwei Gasflaschen, die jeweils auf einer Waage standen, gleichzeitig

640 g Schwefeldioxid (10,0 M) und
170 g Ammoniak (10,0 M) eingeleitet.

b)    Titriermittel

500 g Jod in
10 l Methanol

GSPHA2 B

Die auf den Wassergehalt zu untersuchende Substanz wurde in 20 ml des Lösemittels gelöst und mit dem Titriermittel unter Rühren und unter Ausschluß von Luftfeuchtigkeit bis zum Endpunkt titriert. Die gleichen Ergebnisse wurden erhalten, wenn Methanol teilweise oder vollständig durch Ethylenglykolmonomethylether ersetzt wurde.

Beispiel 5

Lösemittel und Titriermittel werden analog Beispiel 4 hergestellt, wobei das Lösemittel anstelle von 170 g Ammoniak 85 g Ammoniak enthielt. Beide Lösungen wurden vor der Titration zusammengegeben. Die auf ihren Wassergehalt zu untersuchende Substanz wurde in 20 ml eines Lösungsmittels gelöst und mit der das Löse- und Titriermittel enthaltenden Lösung titriert.

Beispiel 6

Es wurde eine Karl-Fischer-Lösung hergestellt, die in 1 l Ethylenglykolmonomethylether
    128   g Schwefeldioxid (2,0 M),
     30,6 g Ammoniak (1,8 M) und
    127   g Jod (0,5 M)
enthielt.
Die auf ihren Wassergehalt zu untersuchende Probelösung wurde als solche, oder gelöst in Ethylenglykolmonomethylether, unter ständigem Rühren unter Ausschluß von Luftfeuchtigkeit bis zum Endpunkt titriert. Mit dieser Fertiglösung ließen sich Wasserbestimmungen durchführen, die bis zu 5,4 mg Wasser pro ml Probelösung enthielten.

GSPHA2 B

Merck Patent Gesellschaft
mit beschränkter Haftung
D a r m s t a d t


Patentansprüche


1. Pyridinfreies Karl-Fischer-Reagenz zur Bestimmung von Wasser, bestehend aus einem Lösemittel, enthaltend Schwefeldioxid und einen Pyridinersatz in einem Lösungsmittel, und einem Titriermittel, enthaltend Jod in einem Lösungsmittel, dadurch gekennzeichnet, daß der Pyridinersatz Benzoat oder Ammoniak ist.

2. Pyridinfreies Karl-Fischer-Reagenz nach Anspruch 1, dadurch gekennzeichnet, daß das molare Verhältnis von Pyridinersatz zu Schwefeldioxid etwa 2 : 1 bis etwa 1 : 2 beträgt.

3. Verfahren zur Bestimmung von Wasser mit Hilfe des pyridinfreien Karl-Fischer-Reagenzes nach den Ansprüchen 1 und 2.


GSPHA2 B